# EUROPEAN PATENT APPLICATION

(11) **EP 4 738 526 A1**
(43) Date of publication of application: **06.05.2026**
(21) Application number: 25206014.0
(22) Date of filing: 01.10.2025
(51) Int. Cl.: H01M 10/42, H01M 10/48

(54) **SYSTEM AND METHOD FOR DIFFERENTIATING VENT CONDITION AND LEAKAGE CONDITION IN A BATTERY PACK**

(30) Priority: 05.11.2024 US 202418937997
(71) Applicant: Life Safety Distribution GmbH, 1180 Rolle (CH)
(72) Inventor: FOLEY, Thomas Mark, Charlotte, 28202 (US); PRATT, Keith Francis Edwin, Charlotte, 28202 (US); CHAPPLES, John, Charlotte, 28202 (US)
(74) Representative: Haseltine Lake Kempner LLP

(57) **Abstract**

A system to differentiate between a vent condition and a leakage condition of electrolyte vapors released from a battery pack is disclosed. The system comprises a sensing element having a polymer support to detect a concentration of the electrolyte vapors, a heating element positioned and configured to heat the polymer support of the sensing element to evaporate electrolyte from the polymer support, at least one processor communicatively coupled with the sensing element and the heating element to activate and subsequently deactivate the heating element for an amount of time, determine the vent condition when the concentration of the electrolyte vapors exceeds a threshold level within a predefined time interval after the deactivation of the heating element, determine the leakage condition when the concentration of the electrolyte vapors does not exceed the threshold level within the predefined time interval.

## Description

### TECHNOLOGICAL FIELD

Example embodiments of the present disclosure generally relates to a system for battery pack, and more particularly relates to a system and a method for differentiating between a vent condition and a leakage condition of electrolyte vapors released from the battery pack.

### BACKGROUND

In battery packs such as lithium-ion battery packs, traces of electrolyte vapor are sometimes released due to leakage and/or the venting of the electrolyte vapor. During a vent condition within the battery pack, a higher concentration of the electrolyte vapor is released than during a leakage condition. Conventional sensors, however, struggle to distinguish between leakage and vent conditions in the battery packs.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a system to differentiate between a vent condition and a leakage condition of electrolyte vapors released from a battery pack is disclosed. The system comprises a sensing element configured to detect a concentration of the electrolyte vapors released from the battery pack. Further, the sensing element comprises a polymer support. The system further comprises a heating element positioned and configured to heat the polymer support of the sensing element to evaporate electrolyte from the polymer support and at least one processor communicatively coupled with the sensing element and the heating element. Further, the at least one processor is configured to activate the heating element for an amount of time and subsequently deactivate the heating element, determine the vent condition in an instance in which the concentration of the electrolyte vapors exceeds a threshold level within a predefined time interval after the deactivation of the heating element, and determine the leakage condition in an instance in which the concentration of the electrolyte vapors does not exceed the threshold level within the predefined time interval.

In some embodiments, the at least one processor is configured to trigger an alarm via an alarm unit communicatively coupled to the at least one processor in an instance in which the vent condition is determined. In some embodiments, the concentration of the electrolyte vapors increases rapidly during the vent condition as compared to the concentration of the electrolyte vapors during the leakage condition.

In some embodiments, the at least one processor is further configured to iteratively activate the heating element for the amount of time, and subsequently deactivate the heating element for a second amount of time. Further, the second amount of time is less than or equal to the predefined time interval to prevent the concentration of the electrolyte vapors from exceeding the threshold level and to prevent triggering of the alarm by the alarm unit when there is the leakage condition of the electrolyte vapors being released from the battery pack.

In some embodiments, the amount of time that the heating element is activated by the at least one processor is sufficient to evaporate the electrolyte from the polymer support of the sensing element. In some embodiments, the heating element is configured to increase temperature of the polymer support of the sensing element by a set temperature that is sufficient to evaporate the electrolyte from the polymer support of the sensing element.

In some embodiments, the polymer support is positioned to and configured to absorb the electrolyte vapors that are released from the battery pack. In some embodiments, the heating element comprises a Micro-Electro-Mechanical Systems (MEMS) heater. In some embodiments, the heating element is positioned to heat the polymer support by being positioned locally to, in contact with, co-planar with, or under the sensing element. In some embodiments, the predefined time interval is greater than five minutes.

In another example embodiment, a method is disclosed. The method comprising steps of detecting, via a sensing element, a concentration of the electrolyte vapors released from the battery pack, wherein the sensing element comprising a polymer support, heating, via a heating element positioned with the polymer support of the sensing element, the polymer support to evaporate electrolyte from the polymer support, activating, via at least one processor communicatively coupled with the sensing element and the heating element, the heating element for an amount of time and subsequently deactivate the heating element, determining, via at least one processor, the vent condition in which the concentration of the electrolyte vapors exceeds a threshold level within a predefined time interval, after the deactivation of the heating element and determining, via the at least one processor, the leakage condition in an instance in which the concentration of the electrolyte vapors does not exceed the threshold level within the predefined time interval.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system to differentiate between a vent condition and a leakage condition of electrolyte vapors released from a battery pack in accordance with an example embodiment of the present disclosure;
FIG. 2A illustrates a schematic diagram of a sensing element in the leakage condition, in accordance with an example embodiment of the present disclosure;
FIG. 2B illustrates a schematic diagram of the sensing element in the vent condition, in accordance with an example embodiment of the present disclosure;
FIG. 3A illustrates a graph showing change in a corresponding signal of the sensing element in conjunction with another graph showing triggering of the alarm during a leakage condition, in accordance with an example embodiment of the present disclosure;
FIG. 3B illustrates a graph showing change in the corresponding signal of the sensing element in conjunction with another graph showing triggering of the alarm during a vent condition, in accordance with an example embodiment of the present disclosure;
FIG. 4 illustrates a schematic diagram of operations of the system, in accordance with an example embodiment of the present disclosure;
FIG. 5A illustrates a graphical representation of operations of the system during a vent condition, in accordance with an example embodiment of the present disclosure;
FIG. 5B illustrates a graphical representation of operations of the system during a leakage condition, in accordance with an example embodiment of the present disclosure;
FIG. 6 illustrates a graphical representation of the system during a leakage condition, in accordance with an example embodiment of the present disclosure; and
FIG. 7 illustrates a flowchart showing a method for differentiating between the vent condition and the leakage condition of electrolyte vapors released from the battery pack, in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a system to differentiate between a vent condition and a leakage condition of electrolyte vapors released from a battery pack. The system may comprise a sensing element, a polymer support, a heating element and at least one processor. Embodiments may be configured to detect a concentration of the electrolyte vapors released from the battery pack. Embodiments may be configured to evaporate electrolyte from the polymer support. Embodiments may be configured to determine the vent condition or the leakage condition of the electrolyte vapors released from the battery pack.

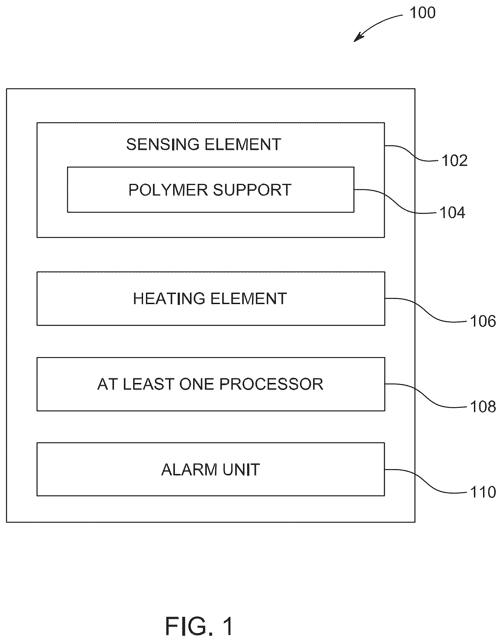

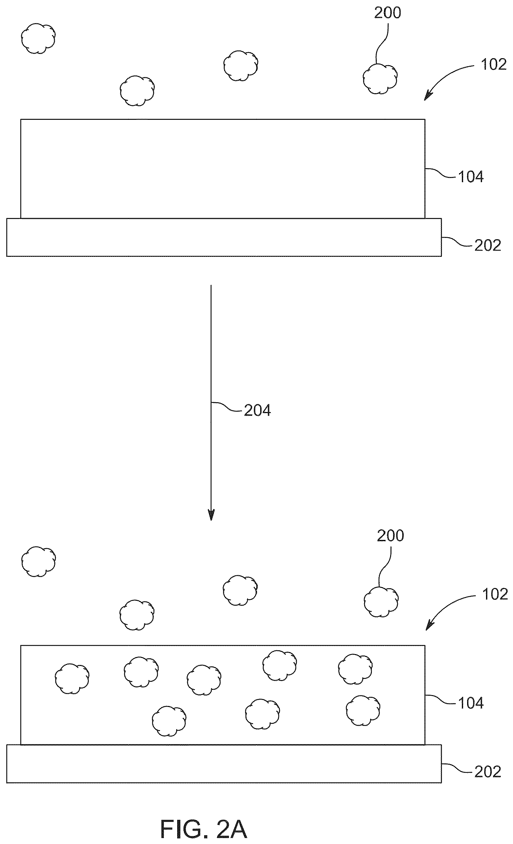

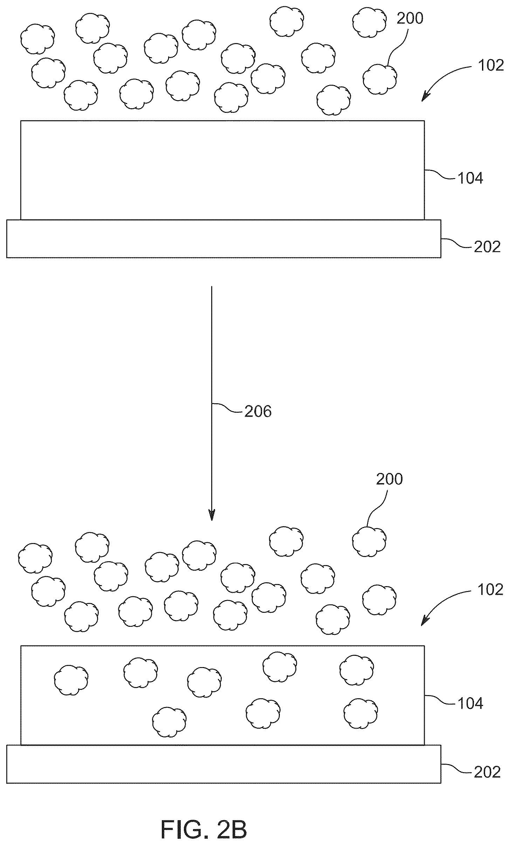

FIG. 1 illustrates a block diagram of a system 100 to differentiate between a vent condition and a leakage condition of electrolyte vapors released from a battery pack, in accordance with an example embodiment of the present disclosure. FIG. 2A illustrates a schematic diagram of a sensing element 102 in the leakage condition, in accordance with an example embodiment of the present disclosure. FIG. 2B illustrates a schematic diagram of the sensing element 102 in the vent condition, in accordance with an example embodiment of the present disclosure.

In some embodiments, the system 100 comprises the sensing element 102 configured to detect concentration of electrolyte (shown in FIGS. 2A and 2B) during a leakage condition or a vent condition in the battery pack. In some embodiments, the leakage condition of the battery pack corresponds to leakage of electrolytes in the form of electrolyte vapors 200 from the cell of the battery pack due to manufacturing defects or degradation over time. In some embodiments, the vent condition of the battery pack corresponds to release of electrolytes in the form of the electrolyte vapors 200 due to internal pressure build up within the battery pack. In an example, the vent condition may release more electrolyte vapors from the battery pack than the leakage condition. In some embodiments, during the leakage condition the electrolyte vapors 200 builds up gradually inside the battery pack, whereas, during the vent condition, the electrolyte vapors 200 builds up rapidly inside the battery pack. In some embodiments, the system 100 may be installed within the battery pack to detect release of electrolyte vapors 200 during the leakage condition or vent condition. In some embodiments the system 100 may include the sensing element 102, a heating element 106, and at least one processor 108, The sensing element may include a polymer support 104. The system 100 may include an alarm unit 110. In various examples, the sensing element is configured the same as or similar to a sensor as described in U.S. Patent Application No. 18/164,314, filed February 3, 2023, and published as U.S. Patent Publication No. US 2024/0264106A1, which is hereby incorporated by reference in its entirety.

In some embodiments, the sensing element 102 may include the polymer support 104, over a substrate 202 (shown in FIG. 2A). The polymer support 104 may interact with (e.g., absorb) the electrolyte vapors 200 during the leakage condition or vent condition. In some embodiments, the substrate 202 may provide structural foundation for the polymer support 104. In some embodiments, the polymer support 104 may be uniformly coated over the substrate 202. In an example, the polymer support 104 may be doped with ionic salts. Further, the ionic salts may facilitate movement of ions within a matrix of the polymer support 104. The movement of ions within the matrix increases conductivity of the polymer support 104 when the polymer support 104 comes in contact with an analyte. In some embodiments, the analyte correspond to chemical constituent in the form of a fluid that interacts with the polymer support 104. In an example, herein, the analyte may be the electrolyte as the fluid inside the battery pack.

In some embodiments, the polymer support 104 may be configured to absorb at least some of the electrolyte vapors 200. For example, the polymer support 104 may absorb some of the electrolyte vapors 200 when the electrolyte vapors 200 is in the presence of the sensing element 102. In some embodiments, absorbing at least some of the electrolyte vapors 200 may cause the polymer support 104 to solvate. In this regard, for example, the polymer support 104 may become more flexible. In some embodiments, the polymer support 104 may include an ionic salt. In some embodiments, absorbing at least some of the electrolyte vapors 200 may cause the ionic salt to solvate. In this regard, for example, the ionic salt may dissolve into the polymer support 104 (e.g., the ionic salt may dissociate into ions). In some embodiments, the polymer support 104 may absorb some of the electrolyte vapors 200 (and solvate the polymer support 104 and/or the ionic salt) within one minute of the electrolyte vapors 200 being in the presence of the sensing element 102. In some embodiments, absorbing at least some of the electrolyte vapors 200 and, as a result, causing the polymer support 104 and/or the ionic salt to solvate, causes a conductivity of the polymer support 104 to increase. In this regard, for example, if the conductivity of the polymer support 104 increases, the impedance of the polymer support 104 may decrease. As another example, if the conductivity of the polymer support 104 increases, the phase angle associated with the polymer support 104 (e.g., the phase angle of the impedance of the polymer support 104) may shift (e.g., the phase angle associated with the polymer support 104 may shift such that the phase angle exceeds a phase angle threshold).

In some embodiments, the electrolyte vapors 200 may be any vapor that may solvate the ionic salt. For example, as described above, the electrolyte vapors 200 may be associated with one or more battery pack. In some embodiments, the electrolyte vapors 200 may be released from one of the one or more battery pack. In some embodiments, the electrolyte vapors 200 may be comprised of one or more of propylene carbonate (PC), ethylene carbonate (EC), diethyl carbonate (DEC), dimethyl carbonate (DMC), ethyl methyl carbonate (EMC), dimethoxyethane (DME), or gamma-butyrolactone (GBL).

In some embodiments, during the leakage condition the electrolyte vapors 200 builds up gradually inside the battery pack. In some embodiments, during the leakage condition, the rate of change in concentration of electrolyte vapors 200 may be slow or relatively slower than in the vent condition. Thus, in an example, the concentration of the electrolyte vapor 200 may increase sufficiently to interact with the polymer support 104 at a longer time interval. Further, the polymer support 104 may be saturated due to sufficient increase in concentration of the electrolyte vapor 200 at a longer time interval.

In some embodiments, during the vent condition the electrolyte vapors 200 builds up rapidly inside the battery pack. In some embodiments, during the vent condition, the rate of change in concentration of the electrolyte vapors 200 may be fast or relatively faster than in the leakage condition. Thus, in an example, the concentration of the electrolyte vapor 200 may increase sufficiently to interact with the polymer support 104 at shorter time interval. Further, the polymer support 104 may be saturated due to sufficient increase in concentration of the electrolyte vapors 200 at a shorter time interval.

In an example, during the leakage condition, the concentration of the electrolyte vapors 200 may increase sufficiently to interact with the polymer support 104 at time interval '*T*' (as depicted by 204), whereas, during the vent condition, the concentration of the electrolyte vapors 200 may increase sufficiently to interact with the polymer support 104 at time interval *'t'* (as depicted by 206). In some embodiments, the time interval '*T*' may be more than the time interval '*t*'. In an example, the time interval '*T*' may be in the range of 5 minutes up to hours or days and the time interval '*t*" may be in the range of few seconds up to a minute. In an example, during leakage condition the concentration of the electrolyte vapors 200 may increase sufficiently to interact with the polymer support 104 within the time interval *'T'.* In some embodiments, during vent condition the concentration of the electrolyte vapors 200 may increase sufficiently to interact with the polymer support 104 within the time interval '*t*'. Accordingly, in some embodiments, the sensing element 102 may generate the corresponding signal in the time interval '*T*' during the leakage condition. Further, the sensing element 102 may generate the corresponding signal within the time interval *'t'* during the leakage condition.

In some embodiments, the heating element 106 may be coupled to the sensing element 102. The heating element 106 may heat the polymer support 104 of the sensing element 102 to evaporate electrolyte from the polymer support 104. In some embodiments, the heating element 106 may increase temperature of the sensing element 102 up to a predefined temperature, which may be more than an ambient temperature and may be sufficient to evaporate the electrolyte from the polymer support 104. In some embodiments, the predefined temperature may be in the range of 50° C to 150° C. In some embodiments, the predefined temperature may depend on the polymer support 104 or electrolyte. In some embodiments, the heating element 106 may correspond to a Micro-Electro-Mechanical Systems (MEMS) heating element. In an example, the MEMS heating element may be fabricated in contact with the substrate 202 of the sensing element 102 using microfabrication techniques. The MEMS heating element may comprise a silicon substrate having micro-scale resistive elements that generate heat in response to electrical stimulus. Further, in some embodiments, the heating element 106 may be coupled to the sensing element 102 by positioning the heating element 106 at least locally, co-planar with or under the sensing element 102.

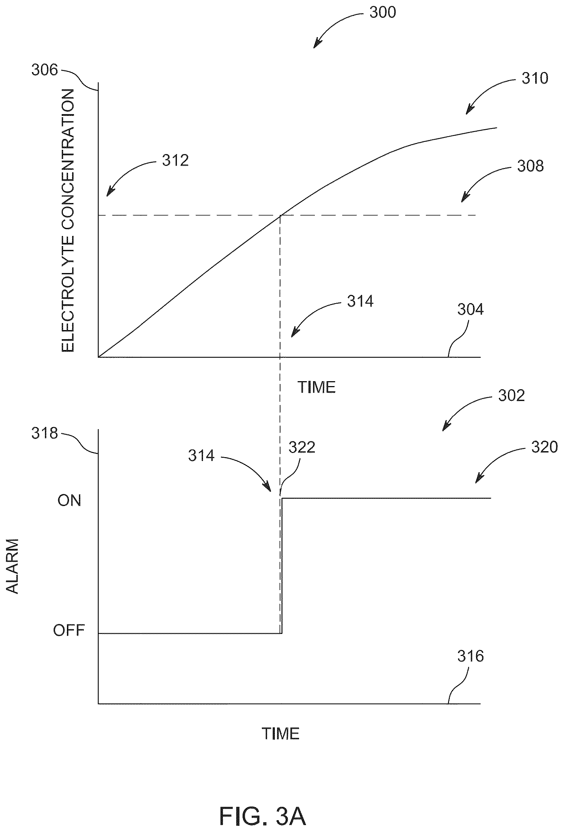

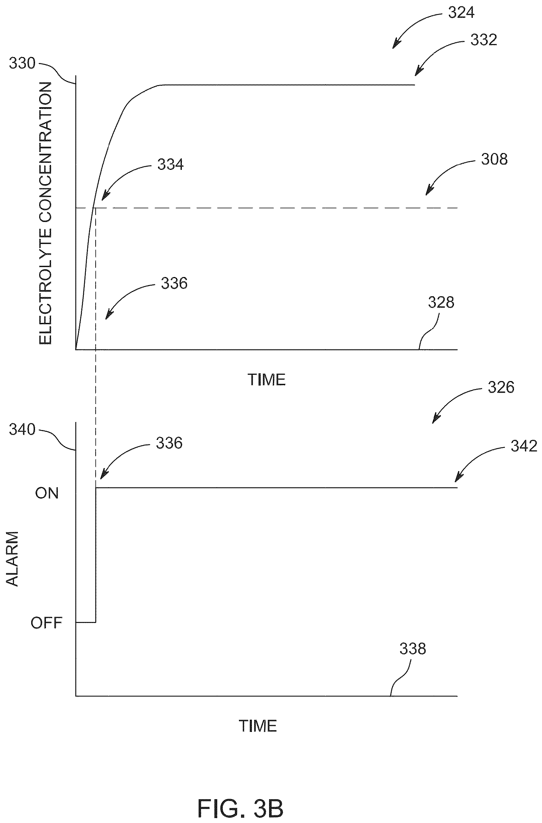

In an example, the heating element 106 may be positioned proximate to, such as under the polymer support 104 via the substrate 202. In some embodiments, the at least one processor 108 may activate the heating element 106 for an amount of time to evaporate the electrolyte and reset the corresponding signal to a baseline signal. In some embodiments, the at least one processor 108 may activate the heating element 106 until a corresponding signal 310 (shown in FIG. 3) of the sensing element 102 is stable (e.g. within 1% of maximum value of the corresponding signal 310. In an example, the at least one processor 108 may activate the heating element 106 until the corresponding signal 310 (shown in FIG. 3) of the sensing element 102 is reset. In some embodiments, the baseline signal may correspond to zero or null corresponding signal from the sensing element 102. In some embodiments, the baseline signal may correspond to a sufficient amount of the electrolyte concentration being evaporated from the sensing element, which may be below the threshold level 308. For example, the baseline signal may correspond to less than a 10 percent saturation of electrolyte in the polymer support of the sensing element. The increase in temperature of the sensing element 102 may cause evaporation of the electrolyte absorbed on the sensing element 102. Due to evaporation of the electrolyte, the sensing element 102 resets such that the corresponding signal resets up to the baseline signal. In some embodiments, the baseline signal is less than the threshold level.

In some embodiments, the at least one processor 108 may subsequently deactivate the heating element 106 to record change in the corresponding signal subsequently within the one of more amount of time or time interval(s) after deactivating the heating element 106. In some embodiments, the at least one processor 108 may analyze change in the corresponding signal with respect to the threshold level. In some embodiments, the system 100 may further comprise the alarm unit 110 coupled to the at least one processor 108. The alarm unit 110 may be configured to generate an alert when the corresponding signal from the sensing element 102 exceeds the threshold level. In some embodiments, the threshold level may be half or quarter of the corresponding signal generated by the sensing element 102. In some embodiments, the at least one processor 108 may be configured to trigger the alarm via the alarm unit 110 when the corresponding signal exceeds the threshold level. In some embodiments, the at least one processor 108 is configured to trigger the alarm via the alarm unit 110 an instance in which the vent condition is determined.

In some embodiments, during the vent condition the electrolyte in the form of the electrolyte vapors 200 builds up rapidly inside the battery pack. In some embodiments, during the vent condition, the rate of increase in concentration of electrolyte in the battery pack may be fast or relatively faster than in the leakage condition. Thus, in an example, the concentration of the electrolyte may be detected by the sensing element 102 and the corresponding signal may exceed the threshold level in a predefined time interval e.g., shorter time interval. In some embodiments, the sensing element 102 may generate the corresponding signal that may exceed the threshold level in time interval 'T' during the leakage condition. Further, the sensing element 102 may generate the corresponding signal that may exceed the threshold level within time interval of 't' during the vent condition.

In some embodiments, during the leakage condition the electrolyte vapors 200 may build up gradually inside the battery pack. In some embodiments, during the leakage condition, the rate of increase in concentration of the electrolyte vapors 200 in the battery pack may be slow or relatively slower than in the vent condition. Thus, in an example, the concentration of the electrolyte vapors 200 may be detected by the sensing element 102 and the corresponding signal may exceed the threshold level in a longer time interval. In some embodiments, the at least one processor 108 may be configured to iteratively activate the heating element 106 for the amount of time and subsequently deactivate the heating element 106 for a second amount of time. The second amount of time is less than or equal to the predefined time interval, to prevent the concentration of the electrolyte vapors 200 from exceeding the threshold level. Further, the second amount of time is less than or equal to the predefined time interval to prevent triggering of the alarm by the alarm unit 110 when there is the leakage condition of the electrolyte vapors 200 being released from the battery pack. Further, the at least one processor 108 may differentiate between the vent condition and the leakage condition by triggering the alarm within the time interval 't' for the vent condition and the time interval 'T' for the leakage condition, such that 'T' is relatively more than 't'.

FIG. 3A illustrates a graph 300 showing change in a corresponding signal of the sensing element 102 in conjunction with another graph 302 showing triggering of the alarm during the leakage condition, in accordance with an example embodiment of the present disclosure. FIG. 3B illustrates a graph 324 showing change in the corresponding signal of the sensing element 102 in conjunction with a graph 326 showing triggering of the alarm during the vent condition, in accordance with an example embodiment of the present disclosure.

In an example, as shown in FIG. 3A, a change in a corresponding signal 310 during the leakage condition with respect to time may be plotted as the graph 300. The graph 300 includes an X-axis 304 and a Y-axis 306. The X-axis 304 may represent time and the Y-axis 306 may represent change in the corresponding signal 310. The graph 300 further includes a threshold level 308. The threshold level 308 may be considered as 50% of maximum value of the corresponding signal 310 at the maximum (312 shown as 50% of maximum value of the corresponding signal 310). In an example, the threshold level 308 may be in the range of 25% to 90% of the maximum value of the corresponding signal 310. In an example, the maximum value of the corresponding signal 310 may correspond to saturation of the polymer support 104 while interacting with extremely high concentration of the electrolyte vapors 200.

In an example, when the heating element 106 is deactivated, the corresponding signal 310 (e.g., the electrolyte concentration) may increase. In some embodiments, the corresponding signal 310 may exceed the threshold level 308 at a time interval 314. Further, the rate of change in the corresponding signal 310 may be low. Further, the time interval 314 at which the corresponding signal 310 exceeds the threshold level 308 may be relatively long (as compared to a vent condition) due to a low rate of change in the corresponding signal 310. In some embodiments, the low rate of change in the corresponding signal 310 corresponds to the leakage condition in the battery pack. Further, during the leakage condition, the corresponding signal 310 may gradually increase and exceed the threshold level 308 at the time interval 314 (T).

In an example as shown in the graph 302, time is plotted on X-axis 316 and the alarm output 320 of the sensing element 102 is plotted on Y-axis 318. The graph 302 is linked to the graph 300 at the time interval 314, specifically at time 322 as the concentration of the electrolyte vapors 200 exceed the threshold level 308, the alarm turns on (shown in FIG. 3A). In an example, the at least one processor 108 may trigger the alarm unit 110 as shown by the alarm output 320. As shown in the graph 302, before the time interval 314, the at least one processor 108 may not trigger the alarm unit 110 due to the corresponding signal 310 being below the threshold limit 308. Further, after the time interval 314, at the time 322, the at least one processor 108 may trigger the alarm unit 110 (shown as the alarm output 320) as the corresponding signal 310 exceeds the threshold level 308. In some embodiments, at least one processor 108 may trigger the alarm unit 110 after the time interval 314 which may be in the range of 5 minutes up to hours or days ('T') during the leakage condition.

In an example, as shown in FIG. 3B, change in the corresponding signal 332 due to change in the concentration of the electrolyte vapors 200 during the vent condition with respect to time may be plotted as the graph 324. The graph 324 includes an X-axis 328 and a Y-axis 330. The X-axis 328 may represent time and the Y-axis 330 may represent change in the corresponding signal 332 from the sensing element 102. The graph 324 further includes the threshold level 308. Similar to FIG. 3A, the threshold level 308 may be considered as 50% of maximum value of the corresponding signal (334 shown as 50% of the maximum value). In an example, the maximum value of the corresponding signal 332 may correspond to saturation of the polymer support 104 interacting with extremely high concentration of the electrolyte vapors 200 in vent condition.

In some embodiments, the corresponding signal 332 may exceed the threshold level 308 at time interval 336. Further, the rate of change in the corresponding signal 332 may be high. Further, the time interval 336 at which the corresponding signal 332 exceeds the threshold level 308 may be less due to high rate of change in the corresponding signal 332. In some embodiments, the high rate of change in the corresponding signal 332 corresponds to the vent condition in the battery pack. Further, during the vent condition, the corresponding signal 332 may increase and exceed the threshold level 308 at time interval 336 which may be in the range of a few seconds up to a minute ('t') as compared to the range of 5 minutes up to hours or days ('T') in the leakage condition.

In an example as shown in graph 326, time is plotted on X-axis 338 and the triggering of alarm unit 110 in the form of the alarm output 342 is plotted on Y-axis 340. The graph 326 is linked to the graph 324 at the time interval 336. As shown in the graph 326, before the time interval 336, the at least one processor 108 may not trigger the alarm due to the corresponding signal 332 below the threshold limit 308. Further, after the time interval 314, the at least one processor 108 may trigger the alarm unit 110 (shown as the alarm output 342) when the corresponding signal 332 exceeds the threshold level 308. In some embodiments, the at least one processor 108 may trigger the alarm unit 110 after time interval 336 which may be in the range of a few seconds up to a minute ('t') as compared to the range of 5 minutes up to hours or days ('T') in the leakage condition.

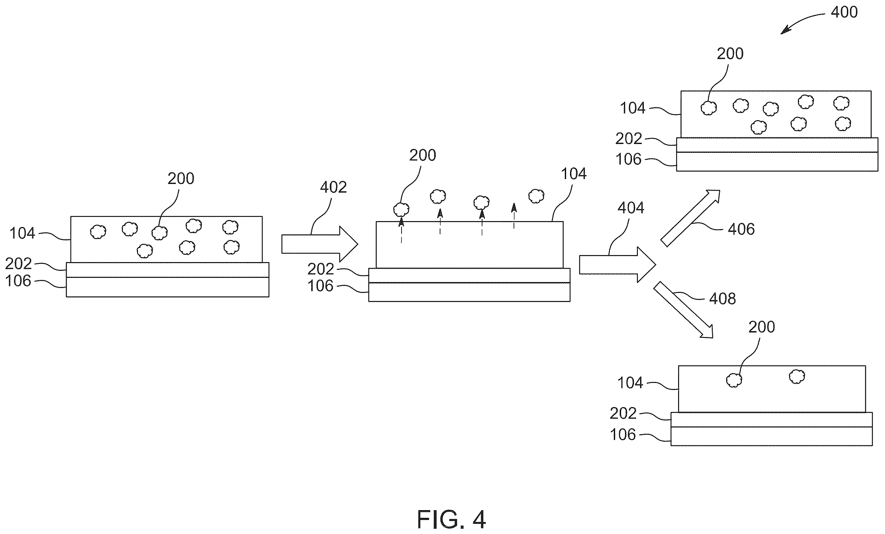

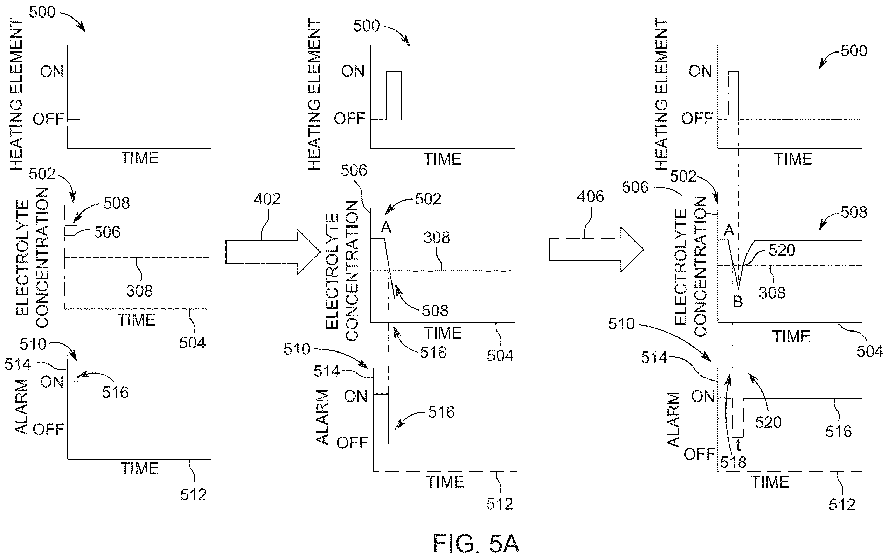

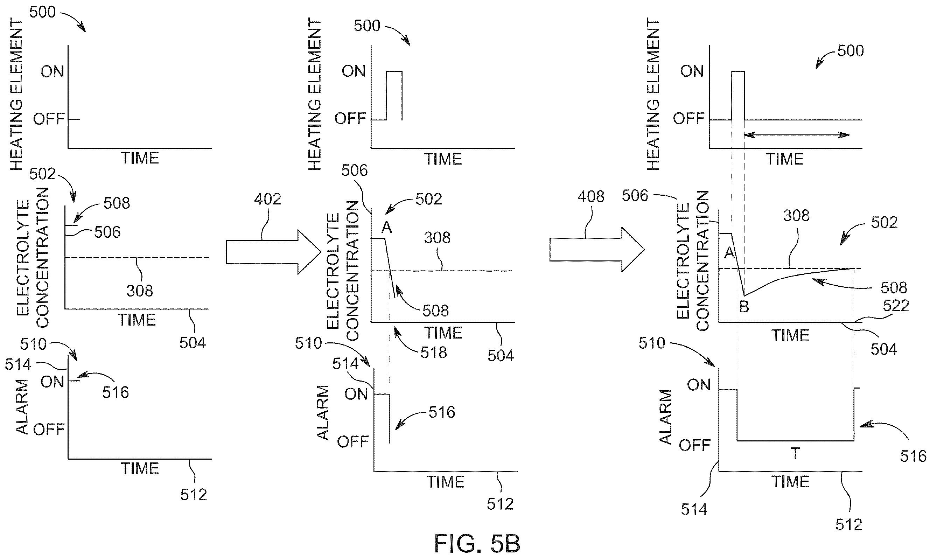

FIG. 4 illustrates a schematic diagram 400 of operations of the system 100, in accordance with an example embodiment of the present disclosure. FIG. 5A illustrates a graphical representation of operations of the system 100 during a vent condition, in accordance with an example embodiment of the present disclosure. FIG. 5B illustrates a graphical representation of operations of the system 100 during a leakage condition, in accordance with an example embodiment of the present disclosure.

In some embodiments, the system 100 comprises the sensing element 102. The sensing element 102 may detect concentration of the electrolyte vapors 200 during the leakage condition or the vent condition in the battery pack and generate the corresponding signal 508 (shown in FIGS. 5A - 5B). In some embodiments, the sensing element 102 may comprise the polymer support 104. The polymer support 104 may interact with the electrolyte vapors 200 and generate the corresponding signal 508. The corresponding signal 508 may be recorded and analyzed by the at least one processor 108.

In some embodiments, the system 100 may comprise the alarm unit 110. The alarm unit 110 may generate an alert when the corresponding signal 508 exceeds the threshold level 308. In some embodiments, the threshold level 308 may be at least 25% of 50% of maximum value of the corresponding signal 508. In some embodiments, the maximum value of the corresponding signal 508 may correspond to saturation of the polymer support 104 with the electrolyte vapors 200.

In an example, as shown in FIG. 5A and 5B, a change in the corresponding signal 508 (e.g., a signal indicative of the electrolyte concentration) with respect to time is plotted in the graph 502. The graph 502 includes an X-axis 504 and a Y-axis 506. The X-axis 504 may represent time and the Y-axis 506 may represent a change in the corresponding signal 508 (e.g., a signal indicative of the electrolyte concentration) from the sensing element 102. The graph 502 further includes the threshold level 308. In an example, when the heating element 106 remains deactivated, a change in the corresponding signal 508 may be constant. In an example, the at least one processor 108 may trigger the alarm unit 110 when the corresponding signal 508 exceeds the threshold level 308. In some embodiments, as shown in the graph 502, a scenario wherein the heating element 106 is "OFF", and the corresponding signal 508 is already above threshold level 308, the alarm may be "ON" (shown as the alarm output 516 in the graph 510) during the vent condition as well as the leakage condition. Hence, when the heating element 106 is "OFF" prior to being turned "ON", the system may not differentiate between the vent condition and the leakage condition as the alarm may be "ON" in both the conditions. In an example, the polymer support 104 may interact (e.g. absorb) with the electrolyte vapors 200 present in the battery pack. Further, the polymer support 104 of the sensing element 102 may interact with the electrolyte vapors 200, and as a result the sensing element 102 may generate the corresponding signal 508, which may be indicative of the electrolyte concentration in the polymer support 104 of the sensing element 102. When the corresponding signal 508 exceeds the threshold level, the at least one processor 108 may trigger the alarm in both leakage condition and vent condition. In another example, the alarm may be "ON" while the corresponding signal 508 is exceeding the threshold level 308 and may be "OFF" while the corresponding signal 508 is less than or equal to the threshold level 308.

In some embodiments, the at least one processor 108 may analyze and process the corresponding signal 508 as the alarm output 516. In an example as shown in graph 510, time is plotted on X-axis 512 and the alarm output "ON" and "OFF" is plotted on Y-axis 514. In an example, the at least one processor 108 may trigger the alarm unit 110 shown as the alarm output 516. As shown in the graph 510, the at least one processor 108 may trigger the alarm unit 110 (shown as the alarm output 516 as ON) upon receiving the corresponding signal 508.

In some embodiments, the system 100 may comprise the heating element 106 coupled with the sensing element 102. The at least one processor 108 may activate the heating element 106 for an amount of time to increase temperature of the sensing element 102. In some embodiments, the heating element 106 may correspond to a Micro-Electro-Mechanical Systems (MEMS) heating element. In some embodiments, the at least one processor 108 may activate the heating element 106 to reset the corresponding signal 508 to a baseline signal. In some embodiments, the baseline signal may correspond to the corresponding signal 508 from the sensing element 102 as zero, null, or at a level that is below the threshold level 308.

In an example, the at least one processor 108 may activate the heating element 106 (represented as the arrow 402 of FIG. 4) for an amount of time. As shown in FIG. 5A, the change in the corresponding signal 508 with respect to time is plotted in the graph 502. The graph 502 further includes the threshold level 308. In an example, when the heating element 106 is activated for the amount of time, the corresponding signal 508 (e.g., the signal indicative to the electrolyte concentration) may decrease to reset as the baseline signal. In an example, the corresponding signal 508 may decrease to reset as the baseline signal due to evaporation of the electrolyte vapors 200 absorbed on the sensing element 102.

In an example, upon activating the heating element 106 (represented as the arrow 402 of FIG. 4), the at least one processor 108 may stop triggering the alarm via the alarm unit 110 as shown in the alarm output 516 when the corresponding signal 508 is below the threshold level 308. As shown in the graph 510 the at least one processor 108 may stop triggering the alarm via the alarm unit 110 (shown as the alarm output 516 as OFF) as a result of the corresponding signal 508.

In some embodiments, the heating element 106 may be deactivated (represented as the arrow 404 of FIG. 4) subsequently at the predefined time interval. The result of deactivation of the heating element 106 on the sensing element 102 reabsorbing the electrolyte vapors 200 is schematically shown after the arrow 406 for the vent condition and the arrow 408 for the leakage condition (as shown FIG. 4). During the vent condition the electrolyte vapors 200 may rapidly saturate the sensing element 102 above the threshold level 308 (e.g., time "t"). During the leakage condition, the electrolyte vapors 200 may gradually saturate the sensing element 102 above the threshold level 308 (e.g., time "T").

Further, upon deactivating the heating element 106, and after the corresponding signal 508 (due to reabsorption of the electrolyte vapors 200 on the sensing element 102) subsequently exceeds the threshold level 308, the at least one processor 108 may be configured to trigger the alarm. The at least one processor 108 may trigger the alarm via the alarm unit during the vent condition based at least on the change in the corresponding signal 508 with respect to the baseline signal and/or the corresponding signal 508 exceeding the threshold level 308. In some embodiments, the at least one processor 108 is configured to differentiate between the vent condition and the leakage condition by determining how long it takes for the corresponding signal 508 to exceed the threshold level 308 after the heating element is turned "OFF".

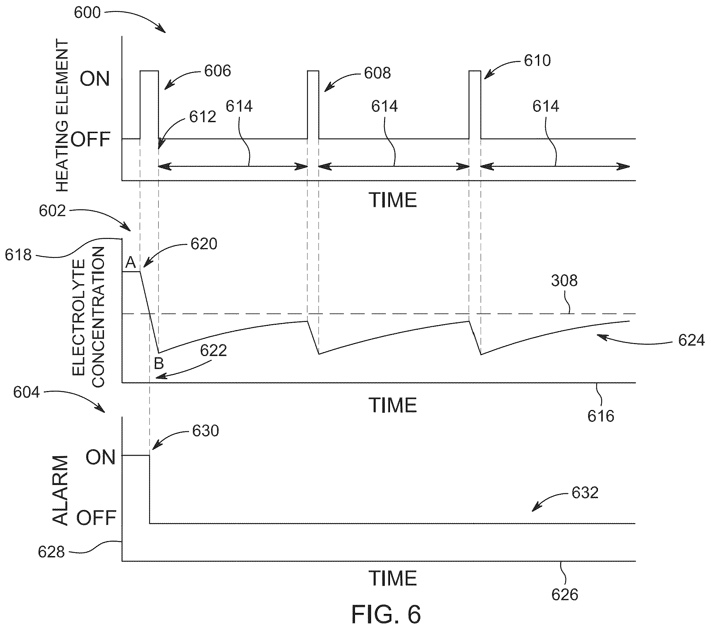

In some embodiments, the at least one processor 108 is configured to activate for an amount of time and deactivate the heating element 106 subsequently for a second amount of time, as will be explained further in reference to FIG. 6. In some embodiments, the second amount of time may be less than or equal to the amount of time. In some embodiments, when the heating element 106 is activated, the increase in temperature of the sensing element 102 causes evaporation of the electrolyte vapors 200 absorbed on the sensing element 102 that resets the corresponding signal 508 to the baseline signal. In an example, when the heating element 106 is activated, the corresponding signal 508 may decrease below the threshold level 308 at the time interval 518 (shown in the graph 502 of FIG. 5B, after the arrow 402). In an example, when the heating element 106 is deactivated, the sensing element 102 may absorb the electrolyte vapours 200 again.

In some embodiments, during the vent condition (shown as 406), the rate of change in concentration of the electrolyte vapors 200 may be fast or relatively faster as compared to the leakage condition. Thus, high concentration of the electrolyte vapors 200 may be absorbed by the polymer support 104 of the sensing element 102. In some embodiments, during the vent condition the electrolyte vapors 200 may build up rapidly inside the battery pack. In some embodiments, during the vent condition, the rate of increase in concentration of electrolyte vapors 200 in the battery pack may be faster than in the vent condition. Thus, high concentration of the electrolyte vapors 200 may be absorbed by the polymer support 104 of the sensing element 102 during the vent condition.

As shown in FIG. 5A, during the vent condition (shown as 406), when the heating element 106 is deactivated at the time interval shown as 'B', the corresponding signal 508 (e.g., signal indicative of the electrolyte concentration) may increase. The corresponding signal 508 may increase up to near the threshold level 308 and may again exceed the threshold level 308 after the time interval 520. In an example, the corresponding signal 508 may increase rapidly due to reabsorption of electrolyte vapors 200 on the sensing element 102. Further, when the heating element 106 is deactivated, high rate of change in the corresponding signal 508 with respect to the baseline signal corresponds to the vent condition. Further, the corresponding signal 508 increases rapidly and exceeds the threshold level 308 that triggers the alarm via the alarm unit 110 at the time intervals 520 (shown in the graph 510 of FIG. 5A), representing the vent condition.

In some embodiments, during the leakage condition (shown as the arrow 408 of FIG. 4) the electrolyte vapors 200 may build up gradually inside the battery pack. In some embodiments, during the leakage condition, the rate of change in concentration of electrolyte vapors 200 may be slow or relatively slower than in the vent condition. As shown in FIG. 5B, during the leakage condition (shown as the arrow 408 of FIG. 5B), when the heating element 106 is deactivated, the corresponding signal 508 may increase. The corresponding signal 508 may increase gradually up to near the threshold level 308 and may not exceed the threshold level 308 within the time interval 522 ('T' shown in FIG. 5B) which is more than the time interval 520 of the vent condition (shown as 't' in FIG. 5B). In an example, the corresponding signal 508 may increase gradually due to reabsorption of electrolyte vapors 200 on the sensing element 102. Further, when the heating element 106 is deactivated, low rate of change in the corresponding signal 508 with respect to the baseline signal corresponds to the leakage condition. Further, the corresponding signal 508 increases gradually near the threshold level 308 that does not trigger the alarm (shown as the alarm output 516 as OFF in the graph 510 of FIG. 5B) within the time interval 520 (shown as 'T') in the leakage condition.

In some embodiments, the at least one processor 108 may determine the vent condition in the instance in which the concentration of the electrolyte vapors 200 exceeds the threshold level 308 within a predefined time interval after the deactivation of the heating element 106 (as shown in the graphs 500, 502, and 510 of FIG. 5A). Further, the at least one processor 108 may determine the leakage condition in an instance in which the concentration of the electrolyte vapors 200 does not exceed the threshold level within the predefined time interval (as shown in the graphs 500, 502, and 510 of FIG. 5B). Thus, the at least one processor 108 may trigger the alarm via the alarm unit 110 in the instance in which the vent condition is determined. The alarm may also be triggered in the leakage condition, but the time between alarms being "on" may be longer (e.g. the time interval 'T') as compared to the vent condition (e.g. time interval 't').

FIG. 6 illustrates a graphical representation of the system 100 during the leakage condition, in accordance with an example embodiment of the present disclosure.

In some embodiments, the at least one processor 108 is configured to iteratively activate the heating element 106 for the amount of time and subsequently deactivate the heating element 106 for a second amount of time. In some embodiments, the second amount of time is less than or equal to the predefined time interval to prevent the concentration of the electrolyte vapors 200 from exceeding the threshold level and prevent triggering of the alarm by the alarm unit 110 during the leakage condition.

As shown in FIG. 6, the graph 600 represents the on and off operations of the heating element 106. The graph 602 represents the change in the corresponding signal 620,624 due to change in concentration of electrolyte (shown as Y axis 618) with respect to time (shown as X-axis 616). The graph 604 represents triggering of the alarm via the alarm unit 110 in response to the corresponding signal 620, 624, wherein the X-axis 628 shows the on/off operations of the alarm unit 110 and Y-axis 626 shows the time.

In some embodiments, when the heating element 106 may be activated (shown as 606) by the at least one processor 108 during the time interval 612, the concentration of the electrolyte may decrease, as shown by the corresponding signal 620 during the time interval 622. The time interval 612 and the time interval 622 may be equivalent and correspond to the amount to time, wherein the corresponding signal 620 decreases from point 'A' to point 'B', when the heating element 106 remains activated. During the time interval 620, the alarm may be triggered via the alarm unit 110 as shown in the alarm output 630.

In some embodiments, during the time interval 608 and the time interval 610 when the heating element 106 is activated, the corresponding signal 624 may increase. In some embodiments, the at least one processor 108 may subsequently deactivate the heating element 106 for the second amount of time 614. Consequently, the corresponding signal 624 may increase. The corresponding signal 624 may increase gradually up to near the threshold level 308 and may not exceed the threshold level 308 within the second amount of time 614. In an example, the corresponding signal 624 may increase gradually due to reabsorption of the electrolyte vapors 200 on the sensing element 102. Further, when the heating element 106 is deactivated, low rate of change in the corresponding signal 624 with respect to the baseline signal corresponds to the leakage condition. Further, the corresponding signal 624 increases gradually near the threshold level 308 that does not trigger (shown as the alarm output 632) the alarm via the alarm unit 110 within the second amount of time 614 in the leakage condition.

In some embodiments, the second amount of time 614 may be less than or equal to the predefined time interval to prevent the concentration of the electrolyte vapors 200 from exceeding the threshold level. Further, the second amount of time 614 being less than or equal to the predefined time interval may prevent triggering of the alarm by the alarm unit 110 when there is the leakage condition, thus enabling the system 100 to differentiate between the leakage condition and the vent condition. For example, in a vent condition, the corresponding signal 624 would rapidly increase and would exceed the threshold level 309 prior to the heating element subsequently being turned "ON". Stated differently, time "t", which is the amount of time it would take for the electrolyte levels (corresponding signal 624) to exceed the threshold level 308 after the heating element is turned "OFF", would be less than the second amount of time 614, which is the amount of time between when the heating element is intermittently turned "ON".

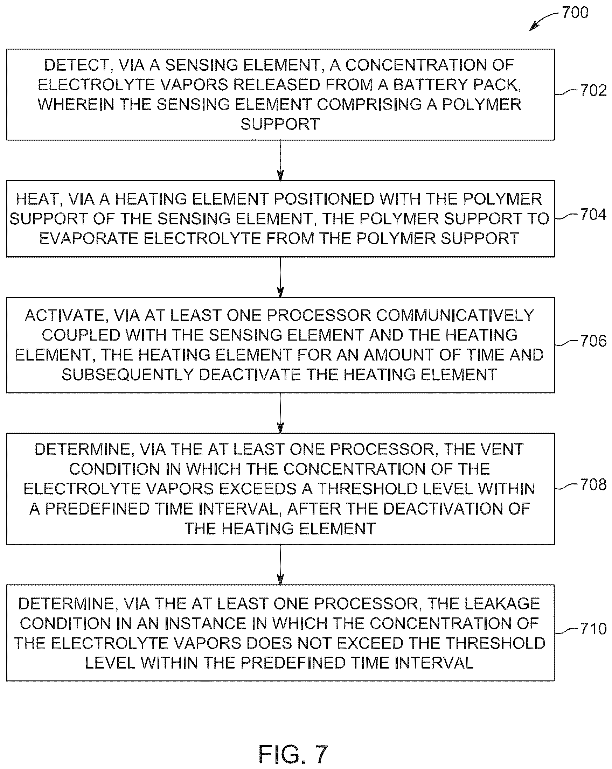

FIG. 7 illustrates a flowchart 700 showing a method for differentiating between the vent condition and the leakage condition of electrolyte vapors released from the battery pack, in accordance with an example embodiment of the present disclosure.

At operation 702, the sensing element 102 may detect a concentration of the electrolyte vapors 200 released from the battery pack. In some embodiments, the sensing element 102 may be configured to detect concentration of electrolyte vapors 200 (shown in FIG. 2). In some embodiments, the sensing element 102 may include the polymer support 104 coated over a substrate 202. In some embodiments, the polymer support 104 may interact with the electrolyte vapors 200 during the leakage condition or vent condition. In an example, the rate of change in concentration of the electrolyte vapors 200 may be different during the leakage condition and the vent condition.

In some embodiments, the sensing element 102 may detect the concentration of the electrolyte vapors 200 during the leakage condition or the vent condition in the battery pack. In an example, the rate of change in concentration of the electrolyte vapors 200 may be different during the leakage condition and the vent condition. In some embodiments, during the leakage condition the electrolyte vapors 200 builds up gradually inside the battery pack. In some embodiments, during the leakage condition, the rate of change in concentration of the electrolyte vapors 200 may be slow or relatively slower than in the vent condition. Thus, in an example, the concentration of the electrolyte vapors 200 may increase sufficiently to interact with the polymer support 104 at longer time interval. In some embodiments, during the vent condition the electrolyte vapors 200 builds up rapidly inside the battery pack. In some embodiments, during the vent condition, the rate of change in concentration of the electrolyte vapors 200 may be fast or relatively faster than in the leakage condition. Thus, in an example, the concentration of the electrolyte vapors 200 may increase sufficiently to interact with the polymer support at shorter time interval.

In some embodiments, the sensing element 102 may generate the corresponding signal 508 (shown in FIGS. 5A-5B) upon detecting the concentration of the electrolyte vapors 200. In an example, the polymer support 104 of the sensing element 102 may be doped with ionic salts. Further, the ionic salts may facilitate movement of ions within matrix of the polymer support 104. The movement of ions within the matrix increases conductivity of the polymer support 104 when the polymer support 104 comes in contact with an analyte. In some embodiments, the analyte correspond to chemical constituent that interacts with the polymer support 104. The chemical constituent that interacts with the polymer support 104 may be measured or detected by the sensing element 102.

In an example, herein, the analyte may be the electrolyte vapors 200 in the battery pack. In some embodiments, as the electrolyte vapors 200 (the analyte) interact with the polymer support 104, the conductivity of the polymer support 104 may increase due to movement of ions within the matrix of the polymer support 104. The increase in the conductivity may be recorded and analyzed by at least one processor 108 to generate the corresponding signal 508. In some embodiments, the corresponding signal 508 may be directly proportional to the concentration of the electrolyte vapors 200 (the analyte). Further, the rate of change of corresponding signal 508 may be directly proportional to rate of change in concentration of the electrolyte vapors 200.

At operation 704, the heating element 106 positioned with the polymer support 104 may heat the polymer support 104 to evaporate electrolyte from the polymer support 104. At operation 706, the at least one processor 108 may activate the heating element 106 for an amount of time and subsequently deactivate the heating element 106. In an example, the at least one processor 108 may be configured to activate the heating element 106 for an amount of time to increase temperature of the sensing element 102 and reset the corresponding signal 508 to a baseline signal. In some embodiments, the heating element 106 may increase temperature of the sensing element 102 up to a predefined temperature more than an ambient temperature. In some embodiments, the heating element 106 may correspond to a Micro-Electro-Mechanical Systems (MEMS) heating element. Further, in some embodiments, the heating element 106 may be coupled to the sensing element 102 by positioning the heating element 106 at least locally, co-planar with or under the sensing element 102. In an example, the increase in temperature of the sensing element 102 may cause evaporation of the electrolyte vapors 200 absorbed on the sensing element 102. Due to evaporation of the absorbed signal, that sensing element 102 is reset such that the corresponding signal 508 resets up to the baseline signal.

In some embodiments, the at least one processor 108 may subsequently deactivate the heating element 106 subsequently to record change in the corresponding signal 508. In some embodiments, the at least one processor 108 may analyze change in the corresponding signal 508 with respect to at least the threshold level 308 (shown in FIG. 5A for the vent condition and FIG. 5B for the leakage condition)), baseline signal and the predefined time intervals. In some embodiments, when the heating element 106 is deactivated, high rate of change in the corresponding signal 508 with respect to the baseline signal corresponds to the vent condition. (shown in FIG. 5A) In some embodiments, when the heating element 106 is deactivated, low rate of change in the corresponding signal 508 with respect to the baseline signal corresponds to the leakage condition in the battery pack (shown in FIG. 5B).

At operation 708, the at least one processor 108 may determine the vent condition in which the concentration of the electrolyte vapors 200 exceeds a threshold level 308 within a predefined time interval, after the deactivation of the heating element 106. Further, at operation 710, the at least one processor 108 may determine the leakage condition in an instance in which the concentration of the electrolyte vapors 200 does not exceed the threshold level within the predefined time interval. Further, the at least one processor 108 may trigger the alarm via the alarm unit 110 in less time 't' during the vent condition, whereas, the alarm may be triggered in relatively more time 'T' during the leakage condition.

In an example, when the heating element 106 is deactivated by the at least one processor 108, the corresponding signal 508 may rapidly increase (due to high rate of change in the corresponding signal), exceeding the threshold level 308 that triggers the alarm within the predefined time intervals in the vent condition.

In some embodiments, the at least one processor 108 may activate the heating element 106 for the amount of time and subsequently deactivate the heating element 106 for a second amount of time. In some embodiments, the second amount of time is less than or equal to the predefined time interval, which prevents triggering of the alarm by the alarm unit 110 when there is the leakage condition of the electrolyte vapors 200 being released from the battery pack.

In an example, when the heating element 106 is deactivated by the at least one processor 108, the corresponding signal may increase gradually (due to slow rate of change in the corresponding signal) up to near the threshold level (not exceeding the threshold level), that does not trigger the alarm within the predefined time intervals in the leakage condition. Further, as the second amount of time is less than or equal to the (preceding) amount of time, the corresponding signal may not exceed the threshold level during subsequent activation and deactivation of the heating unit. Thus, the alarm is triggered during the vent condition only.

Embodiments may be configured to differentiate between the leakage condition and the vent condition in the battery pack. The embodiments may be configured to reset the sensing element 102 by activating the heating element 106. The embodiments may be configured to record change in the corresponding signal 508 of the sensing element 102 when the heating element 106 is activated and deactivated subsequently. The embodiments may be configured to trigger the alarm in time interval 't' during the vent condition and time interval 'T' during the leakage condition, wherein 't' is less than 'T'.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system to differentiate between a vent condition and a leakage condition of electrolyte vapors released from a battery pack, the system comprising:
a sensing element configured to detect a concentration of the electrolyte vapors released from the battery pack, wherein the sensing element comprising a polymer support;
a heating element positioned and configured to heat the polymer support of the sensing element to evaporate electrolyte from the polymer support; and
at least one processor communicatively coupled with the sensing element and the heating element, wherein the at least one processor is configured to:
activate the heating element for an amount of time and subsequently deactivate the heating element;
determine the vent condition in an instance in which the concentration of the electrolyte vapors exceeds a threshold level within a predefined time interval after the deactivation of the heating element; and
determine the leakage condition in an instance in which the concentration of the electrolyte vapors does not exceed the threshold level within the predefined time interval.

2. The system of claim 1, wherein the at least one processor is configured to trigger an alarm via an alarm unit communicatively coupled to the at least one processor in an instance in which the vent condition is determined.

3. The system of claim 2, wherein the concentration of the electrolyte vapors increases rapidly during the vent condition as compared to the concentration of the electrolyte vapors during the leakage condition.

4. The system of claim 2, wherein the at least one processor is configured to iteratively:
activate the heating element for the amount of time; and
subsequently deactivate the heating element for a second amount of time,
wherein the second amount of time is less than or equal to the predefined time interval to prevent the concentration of the electrolyte vapors from exceeding the threshold level and to prevent triggering of the alarm by the alarm unit when there is the leakage condition of the electrolyte vapors being released from the battery pack.

5. The system of claim 1, wherein the amount of time that the heating element is activated by the at least one processor is sufficient to evaporate the electrolyte from the polymer support of the sensing element.

6. The system of claim 5, wherein the heating element is configured to increase temperature of the polymer support of the sensing element by a set temperature that is sufficient to evaporate the electrolyte from the polymer support of the sensing element.

7. The system of claim 1, wherein the polymer support is positioned to and configured to absorb the electrolyte vapors that are released from the battery pack.

8. The system of claim 1, wherein the heating element comprises a Micro-Electro-Mechanical Systems (MEMS) heater.

9. The system of claim 1, wherein the heating element is positioned to heat the polymer support by being positioned locally to, in contact with, co-planar with, or under the sensing element.

10. The system of claim 1, wherein the predefined time interval is greater than five minutes.

11. A method for differentiating between a vent condition and a leakage condition of electrolyte vapors released from a battery pack comprising:
detecting, via a sensing element, a concentration of the electrolyte vapors released from the battery pack, wherein the sensing element comprising a polymer support;
heating, via a heating element positioned with the polymer support of the sensing element, the polymer support to evaporate electrolyte from the polymer support;
activating, via at least one processor communicatively coupled with the sensing element and the heating element, the heating element for an amount of time and subsequently deactivate the heating element;
determining, via the at least one processor, the vent condition in which the concentration of the electrolyte vapors exceeds a threshold level within a predefined time interval, after the deactivation of the heating element; and
determining, via the at least one processor, the leakage condition in an instance in which the concentration of the electrolyte vapors does not exceed the threshold level within the predefined time interval.

12. The method of claim 11, further comprising triggering via the at least one processor, an alarm via an alarm unit communicatively coupled to the at least one processor, in an instance in which the vent condition is determined.

13. The method of claim 12, wherein the concentration of the electrolyte vapors increases rapidly during the vent condition as compared to the concentration of the electrolyte vapors during the leakage condition.

14. The method of claim 12, further comprising:
activating, via the at least one processor, the heating element for the amount of time; and
subsequently deactivating, via the at least one processor, the heating element, for a second amount of time, wherein the second amount of time is less than or equal to the predefined time interval to prevent the concentration of the electrolyte vapors from exceeding the threshold level and to prevent triggering of the alarm by the alarm unit when there is the leakage condition of the electrolyte vapors being released from the battery pack.

15. The method of claim 11, wherein the amount of time that the heating element is activated by the at least one processor is sufficient to evaporate the electrolyte from the polymer support of the sensing element.
